Europäisches Patentamt

European Patent Office

Office européen des brevets

(11) Veröffentlichungsnummer: **0 014 380**
A1

## (12) EUROPÄISCHE PATENTANMELDUNG

(21) Anmeldenummer: 80100339.3

(22) Anmeldetag: 23.01.80

(51) Int. Cl.³: **G 11 B 15/66**

(30) Priorität: 05.02.79 DE 7903059 U

(43) Veröffentlichungstag der Anmeldung:
20.08.80 Patentblatt 80/17

(84) Benannte Vertragsstaaten:
DE FR GB IT SE

(74) Anmelder: BASF Aktiengesellschaft
Carl-Bosch-Strasse 38
D-6700 Ludwigshafen(DE)

(72) Erfinder: Scherer, Volker
Vogesenstrasse 3
D-7601 Willstaett(DE)

(72) Erfinder: Koob, Hubert
Muensterstrasse 4
D-7601 Willstaett(DE)

(54) Einrichtung zum Festlegen eines Bandanfangs an einem Wickelkern.

(57) Einrichtung zum Festlegen eines Bandanfanges (11) an einem Wickelkern (5), mit einer mit der Welle (4) des Wickelkerns (5) verbundenen Hilfsscheibe (9), deren Mantelfläche mit Haftmitteln (10) versehen ist.

EP 0 014 380 A1

0014380

BASF Aktiengesellschaft                    O. Z. 0050/033654

Einrichtung zum Festlegen eines Bandanfangs an einem Wickelkern

Die Erfindung betrifft eine Einrichtung zum Festlegen des
Anfangs eines zu einem freitragenden Wickel aufzuspulenden
Bandes an einem Wickelkern, der mit einer motorisch antreibbaren Welle lösbar verbunden ist und dem eine Bandführung
zugeordnet ist.

Es ist bekannt, den Anfang eines Bandes an einem Wickelkern
in einer dafür vorgesehenen Aussparung an dessen Mantelfläche mittels eines Klemmstücks von Hand oder unter Zuhilfenahme einfacher Werkzeuge zu befestigen. Eine derartige Vorrichtung ist in DE-AS 2 100 959 vorgeschlagen.

Befestigungsmittel dieser Art sind für die Herstellung von
Vorratsbandwickeln in großen Stückzahlen zu kompliziert.
Ferner entstehen durch die über die Mantelfläche hervorstehenden Klemmstücke im Bandwickel Ausbuchtungen, die beispielsweise bei Magnetbändern zu störenden Prägungen und Verdehnungen führen können.

Andere Befestigungsmittel wie Klebebänder, Schlitze oder Nuten in der Mantelfläche des Wickelkerns haben die gleichen
Nachteile.

Sp/Fe

Man hat auch schon versucht, den Bandanfang durch Anfeuchten am Wickelkern haften zu lassen. Eine solche Methode erfordert aber einige Geschicklichkeit und ist überdies nicht zuverlässig.

Der Erfindung liegt daher die Aufgabe zugrunde, eine Einrichtung zu schaffen, mit deren Hilfe der Anfang eines Bandes ohne besondere Geschicklichkeit schnell und einfach an einem Wickelkern festgelegt werden kann.

Die erfindungsgemäße Lösung besteht darin, daß unterhalb oder oberhalb des Wickelkerns koaxial eine Hilfsscheibe mit der Welle des Wickelkerns fest oder über Mitnehmer lösbar verbunden ist und die Mantelfläche der Hilfsscheibe mit adhäsiv oder reibungsschlüssig wirkenden Mitteln versehen ist. Als adhäsives Mittel wird vorzugsweise eine Haftfolie verwendet. Reibungsschlüssige Mittel bestehen in einer vorteilhaften Ausführungsform der Erfindung aus Schlitzen am Umfang der Hilfsscheibe.

Die Einrichtung nach der Erfindung gestattet eine rasche Arbeitsweise bei der Herstellung von Bandwickeln und vermeidet gleichzeitig die erwähnten Beeinträchtigungen des aufgespulten Bandes.

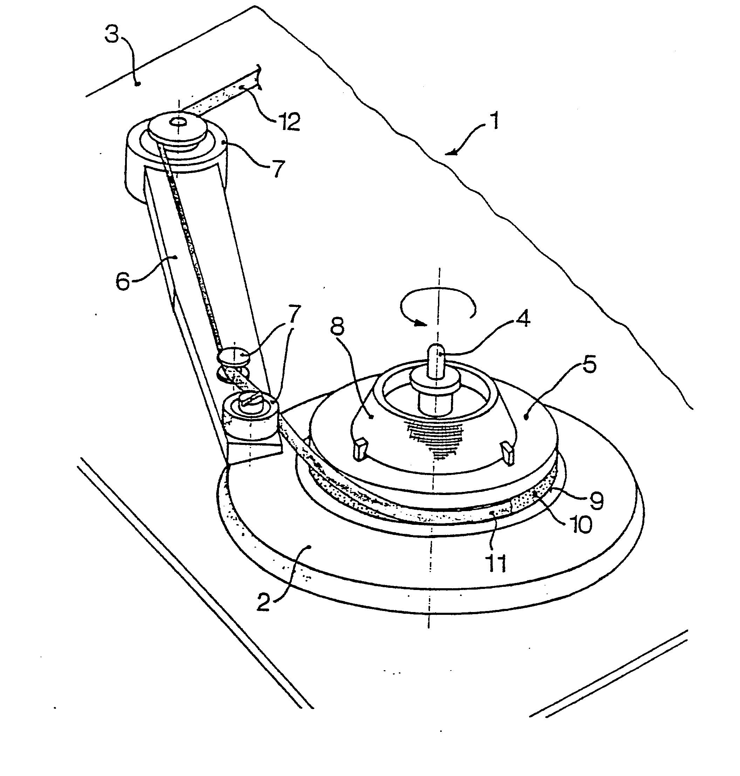

In der Zeichnung ist ein Ausführungsbeispiel der erfindungsgemäßen Einrichtung dargestellt und nachfolgend erläutert.

Wickelkernvorrichtungen für Bänder, insbesondere für Magnetbänder, sind gewöhnlich in einen Arbeitstisch 1 eingebaut und bestehen üblicherweise aus einem Wickelteller 2 über der Tischplatte 3 und einem Antriebsmotor unter derselben. Eine Welle 4, auf der der Wickelteller 2 befestigt ist, reicht durch die Tischplatte 3 hindurch und ist vom Motor direkt oder über ein Getriebe oder Riementrieb antreibbar.

0014380

Der Wickelteller 2 besitzt auf einer Kreislinie um die Welle 4 gleichmäßig verteilte Mitnehmerstifte, die in Aussparungen des auf den Wickelteller aufgelegten Wickelkerns 5 eingreifen. Neben dem Wickelteller ist ein Wickelarm 6 in der Tischplatte 3 drehbar gehalten, der mehrere, in der Ebene des aufgelegten Wickelkerns 5 angeordnete Führungsrollen 7 aufnimmt. Der Wickelkern kann noch mit Hilfe eines konzentrisch zur Welle angeordneten, federbelasteten Klemmringes 8 in axialer Richtung arretiert werden.

Zwischen Wickelteller 2 und Wickelkern 5 ist nun eine Hilfsscheibe 9 aus Aluminium oder Kunststoff eingefügt, die von der Welle 4 mittels radial angesetzter Stege und entsprechend in der Scheibe radial zur Zentrumsbohrung verlaufender Schlitze mit antreibbar ist. Sie hat vorzugsweise den gleichen Durchmesser wie der Wickelkern und ist etwa 2 mm bis 10 mm stark. Die Mantelfläche der Hilfsscheibe 9 ist mit einer Haftfolie 10 versehen, deren Oberflächenrauhigkeit hinsichtlich einer guten adhäsiven Wirkung extrem niedrig ist. Es genügt dann, den Anfang 11 des aufzuspulenden Bandes 12 an den Haftfolienbelag 10 anzudrücken, damit er von der Hilfsscheibe durch die Adhäsionskräfte beim Anlaufen mitgenommen wird. Die Führungsrollen 7 des Wickelarms 6 führen dann das Band für den Wickelvorgang von der Mantelfläche der Hilfsscheibe zu der des Wickelkerns 5.

Selbstverständlich kann anstelle der Haftfolie eine adhäsiv wirkende Schicht unmittelbar auf die Mantelfläche aufgetragen werden.

Ebenso versteht es sich, daß es auch ohne weiteres möglich ist, die Hilfsscheibe 9 über dem Wickelkern 5 anzubringen und mit diesem beim Kernwechsel von der Welle 4 zu lösen. Bei der zuerst geschilderten Ausführungsform kann die Hilfsscheibe auch fest mit der Welle 4 verbunden werden.

0014380

Die Haftwirkung an der Mantelfläche der Hilfsscheibe kann auch dadurch erreicht werden, daß diese mit Schlitzen oder Ringnuten versehen wird, in die der Anfang 11 des Bandes 12 eingezogen bzw. eingedrückt werden kann.

0014380

Patentansprüche

1. Einrichtung zum Festlegen des Anfanges eines zu einem freitragenden Wickel aufzuspulenden Bandes an einem Wickelkern, der mit einer motorisch antreibbaren Welle lösbar verbunden ist und dem eine Bandführung zugeordnet ist, dadurch gekennzeichnet, daß unterhalb oder oberhalb des Wickelkerns (5) koaxial eine Hilfsscheibe (9) mit der Welle (4) des Wickelkerns fest oder über Mitnehmer lösbar verbunden ist und die Mantelfläche der Hilfsscheibe mit adhäsiv oder reibungsschlüssig wirkenden Mitteln versehen ist.

2. Einrichtung nach Anspruch 1, dadurch gekennzeichnet, daß die Mantelfläche der Hilfsscheibe mit einer Haftfolie (10) belegt ist.

3. Einrichtung nach Anspruch 1, dadurch gekennzeichnet, daß die Hilfsscheibe (9) an ihrem Umfang mit einem oder mehreren Schlitzen versehen ist.

Zeichn.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 489 371 (SMITH) | 1,2 |
| A | DE - A - 1 952 385 (BELL) | 1,2 |
| A | US - A - 3 372 884 (NAGANO) | 1,2 |
| A | US - A - 2 753 127 (YUDIN) | 1 |
| A | US - A - 3 298 625 (BABCOCK) | 1,3 |
| A | DE - B - 1 253 576 (KODAK) | 1,3 |
| A | DE - C - 875 573 (SCHAUB) | 1 |
| A | DE - B - 1 162 589 (GELOSO) | 1,3 |
| A | US - A - 3 625 448 (GRIFFITHS) | 1 |
| A | US - A - 3 620 482 (BRAVIN) | 1 |
| A | US - A - 3 011 730 (MARTINO) | 1 |

---

**KLASSIFIKATION DER ANMELDUNG (Int.Cl. 3)**

G 11 B 15/66

**RECHERCHIERTE SACHGEBIETE (Int. Cl. 3)**

G 11 B 15/66
23/02
G 03 B 21/32
B 65 H 65/00
75/28
54/34
19/28

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

---

Der vorliegende Recherchenbericht wurde für alle Patentansprüche erstellt.

| Recherchenort | Abschlußdatum der Recherche | Prüfer |
|---|---|---|
| Den Haag | 13-05-1980 | DECLAT |

EPA form 1503.1 06.78